# EUROPEAN PATENT APPLICATION

(11) **EP 4 790 589 A1**
(43) Date of publication of application: **12.08.2026**
(21) Application number: 26155518.9
(22) Date of filing: 30.01.2026
(51) Int. Cl.: G06N 3/042, G06N 3/045

(54) **GENERATING FAILURE TOKENS FOR EXPERT NEURAL NETWORKS DEPLOYED ON RESPECTIVE HOST COMPUTING SYSTEMS**

(30) Priority: 07.02.2025 US 202519047927
(71) Applicant: GDM Holding LLC, Mountain View, CA 94043 (US)
(72) Inventor: SCHMIT, Herman, Mountain View, CA 94043 (US)
(74) Representative: Kennedy, Richard E.

(57) **Abstract**

Methods, systems, and apparatus, including computer programs encoded on a computer storage medium, for performing a machine learning task on a network input to generate a network output. In one aspect, one of the systems includes a plurality of host computer systems configured to receive the network input for a neural network. The network input includes an input tokens, and the neural network includes multiple layers that include a mixture of experts (MoE) layer that includes (i) a router, (ii) multiple expert neural networks, and (iii) a consolidation layer. The system processes the network input using the neural network, and the system generates a layer output token for the input token from the outputs of the assigned expert neural networks based on outputting one or more failure tokens that indicate a failure occurred during the processing.

## Description

### BACKGROUND

This specification relates to performing a machine learning task on a network input using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

### SUMMARY

This specification describes a system implemented as computer programs on one or more computers in one or more locations that is configured to process a network input using a neural network and to generate a network output characterizing the network input. The neural network includes multiple layers that are each configured to process the network input or an intermediate representation of the network input and to generate a layer output.

The multiple layers can include a Mixture of Experts (MoE) layer between a first layer and a second layer in the neural network. Each MoE layer includes multiple expert neural networks, in which each expert neural network is configured to process a first layer output generated by the first neural network layer in accordance with a respective set of expert parameters of the expert neural network to generate a respective expert output. Additionally, each MoE layer can include a router configured to route inputs to one or more of the expert neural networks and a consolidation layer configured to generate the layer output from the outputs of each of the one or more expert neural networks. Each expert neural network can be deployed on a respective host computer system of multiple host computer systems.

During the processing of the network input using the neural network, the MoE layer can receive a layer input token for the MoE layer derived from an input token of the network input, and the router of the MoE layer can assign the layer input token to one or more of the expert neural networks in the MoE layer. For each assigned expert neural network, the MoE layer can process the layer input token using the expert neural network, determine whether a failure occurred during the processing, and, when a failure did occur, provide, as the output of the assigned expert neural network, one or more failure tokens that indicate that the failure occurred during the processing to the consolidation layer. The consolidation layer can generate a layer output token for the input token from the outputs of the assigned expert neural networks.

Particular embodiments of the subject matter described in this specification can be implemented so as to realize one or more of the following advantages.

Machine learning workloads are frequently executed on systems with multiple devices and, in many cases, on systems with a relatively large number of devices. As the number of devices that are used for performing a machine learning task increases, there is an increased likelihood of a partial system failure. For example, a partial system failure can include a hardware failure of a single device in performing a particular task or computation.

A partial failure of a single device (e.g., a tensor processing unit (TPU) or a central processing unit (CPU)) can result in widespread performance degradation because other components of the machine learning workload rely on accurate outputs being generated by the failed device.

For example, a system may implement a neural network that includes one or more MoE layers to perform a machine learning task, and a failure of one of the expert neural networks in one of the MoE layers, e.g., caused by a failure of the host computer of the expert neural network, can negatively affect the other layers of the neural network because the outputs of the expert neural network will be incomplete, inaccurate, or entirely unavailable.

Using techniques described in this specification, a system can implement graceful degradation in order to avoid widespread system failure or degradation caused by device failures.

In particular, the system can use a consolidation layer to effectively generate an output of an MoE layer, despite a failure having occurred. For example, the consolidation layer can, upon receipt of the failure token(s) indicating a failure at one of the devices hosting one of the expert layers, account for the failure, e.g., in a hard coded manner or in a learned manner, allowing the system to continue to generate high quality outputs even when one or more devices within the system have degraded.

For implementations in which a system executes different neural networks on respective different devices, the system can identify individual failures by respective neural networks or respective host computers of a neural network for a neural network layer by leveraging the consolidation layer to, upon receipt of the failure token(s) indicating a failure, account for the failure, e.g., in a hard coded manner or in a learned manner.

In particular, for MoE implementations, the consolidation layer can receive the outputs of one or more expert neural networks, where the outputs can include one or more failure tokens indicating a failure, and the consolidation layer can still generate an output for the MoE layer based on processing the respective outputs. That is, the consolidation layer can leverage redundancies of the system in order to preserve overall system performance. For example, the router of the MoE layer can route an input token of a layer input to multiple expert neural networks in order to generate a layer output for the MoE layer. In the case of a failure of one of the assigned expert neural networks, the system can advantageously determine to disregard the output of the expert neural network indicating a failure or refrain from routing inputs to the failed expert neural network, allowing the machine learning pipeline to continue without affecting the other layers of the neural network.

Thus, the system can use the consolidation layer to identify the individual failures, allowing the system to fix the failure or alerting a user of the system of the probable hardware failure. As such, the described approach results in a system that can continue to generate outputs despite one or more partial failures by leveraging a consolidation layer that processes one or more failure tokens.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example neural network system.
FIG. 2 shows the operation of a Mixture of Experts (MoE) layer of the neural network system.
FIG. 3 is a flow diagram of an example process for processing a network input to generate a network output.
FIG. 4 is a flow diagram of an example process for processing outputs of one or more expert neural networks using a consolidation layer of the MoE layer.

Like reference numbers and designations in the various drawings indicate like elements.

### DETAILED DESCRIPTION

This specification describes a system implemented as computer programs on one or more computers in one or more locations that performs a machine learning task on a network input to generate a network output for the machine learning task.

The machine learning task can be any machine learning task. For example, the machine learning task can be a task that operates on a network input that is an input sequence, i.e., a collection of multiple elements, to generate a network output for the network input.

Some examples of machine learning tasks that the system can be configured to perform follow.

In some cases, the neural network is a neural network that is configured to perform an image processing task, i.e., receive an input image and to process the input image to generate a network output for the input image. As another example, the task can be image embedding generation and the output generated by the neural network can be a numeric embedding of the input image. As yet another example, the task can be object detection and the output generated by the neural network can identify locations in the input image at which particular types of objects are depicted. As yet another example, the task can be image segmentation and the output generated by the neural network can assign each pixel of the input image to a category from a set of categories. In some other cases, the neural network is a neural network that is configured to perform an image generation task, where the input is a conditioning input and the output is a sequence of intensity value inputs for the pixels of an image.

As one example, the task may be a neural machine translation task. For example, if the input to the neural network is a sequence of text, e.g., a sequence of words, phrases, characters, or word pieces, in one language, the output generated by the neural network may be a translation of the sequence of text into another language, i.e., a sequence of text in the other language that is a translation of the input sequence of text. The vocabulary for the input tokens may be words, wordpieces or characters of the first language, and the vocabulary for the output tokens may be words, wordpieces or characters of the other language. As a particular example, the task may be a multi-lingual machine translation task, where a single neural network is configured to translate between multiple different source language - target language pairs. In this example, the source language text may be augmented with an identifier that indicates the target language into which the neural network should translate the source language text.

Some implementations may be used for automatic code generation. For example the input tokens may represent words, wordpieces or characters in a first natural language and the output tokens may represent instructions in a computer programming or markup language, or instructions for controlling an application program to perform a task, e.g., build a data item such as an image or web page.

As another example, the task may be an audio processing task. For example, if the input to the neural network is a sequence representing a spoken utterance, the output generated by the neural network may be a score for each of a set of pieces of text, each score representing an estimated likelihood that the piece of text is the correct transcript for the utterance. As another example, if the input to the neural network is a sequence representing a spoken utterance, the output generated by the neural network can indicate whether a particular word or phrase ("hotword") was spoken in the utterance. As another example, if the input to the neural network is a sequence representing a spoken utterance, the output generated by the neural network can be a classification of the spoken utterance into one of a plurality of categories, for example an identity of the natural language in which the utterance was spoken.

As another example, the task can be a natural language processing or understanding task, e.g., an entailment task, a paraphrase task, a textual similarity task, a sentiment task, a sentence completion task, a grammaticality task, and so on, that operates on a sequence of text in some natural language.

As another example, the task can be a text to speech task, where the input is text in a natural language or features of text in a natural language and the network output is a spectrogram, a waveform, or other data defining audio of the text being spoken in the natural language.

As another example, the task can be a health prediction task, where the input is a sequence derived from electronic health record data for a patient and the output is a prediction that is relevant to the future health of the patient, e.g., a predicted treatment that should be prescribed to the patient, the likelihood that an adverse health event will occur to the patient, or a predicted diagnosis for the patient. Such electronic health data may, for example, comprise one or more sequences of physiological data taken from a patient, with the output being a corresponding prediction that relates to those sequences of data. Examples of physiological data and a corresponding prediction include: blood glucose measurements, with the prediction being a predicted future blood glucose measurement or the prediction of a hyper- or hypo-glycemic event; a heart rate, with the prediction being the presence or absence of a heart condition, or a future cardiac event; blood pressure measurements, with the prediction being the risk of a future heart condition; or the like.

As another example, the task can be a text generation task, where the input is a sequence of text, and the output is another sequence of text, e.g., a completion of the input sequence of text, a response to a question posed in the input sequence, or a sequence of text that is about a topic specified by the first sequence of text. As another example, the input to the text generation task can be an input other than text, e.g., an image, and the output sequence can be text that describes the input.

In some implementations the input sequence represents data to be compressed, e.g., image data, text data, audio data, or any other type of data; and the output sequence a compressed version of the data. The input and output tokens may each comprise any representation of the data to be compressed/compressed data, e.g., symbols or embeddings generated/decoded by a respective neural network.

As another example, the task can be an agent control task, where the input is a sequence of observations or other data characterizing states of an environment and the output defines an action to be performed by the agent in response to the most recent data in the sequence. The agent can be, e.g., a real-world or simulated robot, a control system for an industrial facility, or a control system that controls a different kind of agent. The observations may comprise sensor data captured by sensors associated with (e.g., part of) the agent, for example visual data, LIDAR data, sonar data, agent configuration data (e.g., joint angles), agent orientation data, or the like.

In some implementations, the environment is a real-world environment, the agent is a mechanical (or electro-mechanical) agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot interacting with the environment to accomplish a specific task, e.g., to locate or manipulate an object of interest in the environment or to move an object of interest to a specified location in the environment or to navigate to a specified destination in the environment.

In these implementations, the observations may include, e.g., one or more of: images, object position data, and sensor data to capture observations as the agent interacts with the environment, for example sensor data from an image, distance, or position sensor or from an actuator. For example in the case of a robot, the observations may include data characterizing the current state of the robot, e.g., one or more of: joint position, joint velocity, joint force, torque or acceleration, e.g., gravity-compensated torque feedback, and global or relative pose of an item held by the robot. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. The observations may also include, for example, sensed electronic signals such as motor current or a temperature signal; and/or image or video data for example captured by a camera or a LIDAR sensor, e.g., data from sensors of the agent or data from sensors that are located separately from the agent in the environment.

In these implementations, the actions may be control signals to control the robot or other mechanical agent, e.g., torques for the joints of the robot or higher-level control commands, or the autonomous or semi-autonomous land, air, sea vehicle, e.g., torques to the control surface or other control elements, e.g., steering control elements of the vehicle, or higher-level control commands. The control signals can include for example, position, velocity, or force/torque/acceleration data for one or more joints of a robot or parts of another mechanical agent. The control signals may also or instead include electronic control data such as motor control data, or more generally data for controlling one or more electronic devices within the environment the control of which has an effect on the observed state of the environment. For example in the case of an autonomous or semi-autonomous land or air or sea vehicle the control signals may define actions to control navigation, e.g., steering, and movement e.g., braking and/or acceleration of the vehicle.

In some implementations the environment is a simulation of the above-described real-world environment, and the agent is implemented as one or more computers interacting with the simulated environment. For example, a system implementing the neural network may be used to select actions in the simulated environment during training or evaluation of the system and, after training, or evaluation, or both, are complete, the action selection policy may be deployed for controlling a real-world agent in the particular real-world environment that was the subject of the simulation. This can avoid unnecessary wear and tear on and damage to the real-world environment or real-world agent and can allow the control neural network to be trained and evaluated on situations that occur rarely or are difficult or unsafe to re-create in the real-world environment. For example the system may be partly trained using a simulation of a mechanical agent in a simulation of a particular real-world environment, and afterwards deployed to control the real mechanical agent in the particular real-world environment. Thus in such cases the observations of the simulated environment relate to the real-world environment, and the selected actions in the simulated environment relate to actions to be performed by the mechanical agent in the real-world environment.

In some implementations, as described above, the agent may not include a human being (e.g., it is a robot). Conversely, in some implementations the agent comprises a human user of a digital assistant such as a smart speaker, smart display, or other device. Then the information defining the task can be obtained from the digital assistant, and the digital assistant can be used to instruct the user based on the task.

For example, a system implementing the neural network may output to the human user, via the digital assistant, instructions for actions for the user to perform at each of a plurality of time steps. The instructions may for example be generated in the form of natural language (transmitted as sound and/or text on a screen) based on actions chosen by the system. The system chooses the actions such that they contribute to performing a task. A monitoring system (e.g., a video camera system) may be provided for monitoring the action (if any) which the user actually performs at each time step, in case (e.g., due to human error) it is different from the action which the system instructed the user to perform. Using the monitoring system the system can determine whether the task has been completed. The system may identify actions which the user performs incorrectly with more than a certain probability. If so, when the system instructs the user to perform such an identified action, the system may warn the user to be careful. Alternatively or additionally, the system may learn not to instruct the user to perform the identified actions, i.e., ones which the user is likely to perform incorrectly.

More generally, the digital assistant instructing the user may comprise receiving, at the digital assistant, a request from the user for assistance and determining, in response to the request, a series of tasks for the user to perform, e.g., steps or sub-tasks of an overall task. Then for one or more tasks of the series of tasks, e.g., for each task, e.g., until a final task of the series the digital assistant can be used to output to the user an indication of the task, e.g., step or sub-task, to be performed. This may be done using natural language, e.g., on a display and/or using a speech synthesis subsystem of the digital assistant. Visual, e.g., video, and/or audio observations of the user performing the task may be captured, e.g., using the digital assistant. A system as described above may then be used to determine whether the user has successfully achieved the task, e.g., step or sub-task, i.e., from the answer as previously described. If there are further tasks to be completed the digital assistant may then, in response, progress to the next task (if any) of the series of tasks, e.g., by outputting an indication of the next task to be performed. In this way the user may be led step-by-step through a series of tasks to perform an overall task. During the training of the neural network, training rewards may be generated, e.g., from video data representing examples of the overall task (if corpuses of such data are available) or from a simulation of the overall task.

In a further aspect there is provided a digital assistant device including a system as described above. The digital assistant can also include a user interface to enable a user to request assistance and to output information. In implementations this is a natural language user interface and may comprise a keyboard, voice input-output subsystem, and/or a display. The digital assistant can further include an assistance subsystem configured to determine, in response to the request, a series of tasks for the user to perform. In implementations this may comprise a generative (large) language model, in particular for dialog, e.g., a conversation agent such as Sparrow (Glaese et al. arXiv:2209.14375) or Chinchilla (Hoffmann et al. arXiv:2203.15556). The digital assistant can have an observation capture subsystem to capture visual and/or audio observations of the user performing a task; and an interface for the above-described language model neural network (which may be implemented locally or remotely). The digital assistant can also have an assistance control subsystem configured to assist the user. The assistance control subsystem can be configured to perform the steps described above, for one or more tasks, e.g., of a series of tasks, e.g., until a final task of the series. More particularly the assistance control subsystem and output to the user an indication of the task to be performed, capture, using the observation capture subsystem, visual or audio observations of the user performing the task, determine from the above-described answer whether the user has successfully achieved the task. In response the digital assistant can progress to a next task of the series of tasks and/or control the digital assistant, e.g., to stop capturing observations.

As another example, the task can be a genomics task, where the input is a sequence representing a fragment of a DNA sequence or other molecule sequence and the output is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the machine learning task is a combination of multiple individual machine learning tasks, i.e., the system is configured to perform multiple different individual machine learning tasks, e.g., two or more of the machine learning tasks mentioned above. For example, the system can be configured to perform multiple individual natural language understanding tasks, with the network input including an identifier for the individual natural language understanding task to be performed on the network input.

In some cases, the machine learning task is a multi-modal processing task that requires processing multi-modal data. In general, multi-modal data is a combination of two or more different types of data, e.g., two or more of audio data, image data, text data, or graph data. As one example the multi-modal data may comprise audio-visual data, comprising a combination of pixels of an image or of video and audio data representing values of a digitized audio waveform. As another example the multi-modal data may comprise a combination of i) text data representing text in a natural language and ii) pixels of an image or of video or audio data representing values of an audio waveform. Optionally, but not necessarily, the different types of data may represent the same or overlapping objects using the different modalities (types), and when processing multi-modal data the data may be mapped into a common embedding space.

As a particular example, the task is a multi-modal processing task that requires processing both text and image inputs, so that the neural network includes both a computer vision neural network and a text processing neural network. That is, the target output to be generated by the computer vision neural network for a given image depends on one or more outputs generated by the text processing neural network for one or more corresponding text inputs (and vice versa). Examples of such tasks include open-vocabulary image classification, open-vocabulary object detection, image captioning, text-based image search, image-based retrieval, and so on.

More generally, the multi-modal processing task may correspond to any of the tasks previously described for any of the types of data making up the multi-modal combination. For example, an accuracy of the previously described tasks may be increased when the task is applied to multi-modal data combining the data for which the task has been previously described and another type of data. For example detection or classification of an object or event may be improved when data of multiple different types (modalities) is processed.

In practice, for any of these examples, the task to be performed by the neural network can be defined by (at least a part of) the network input, e.g., that is in the form of a prompt or a request, received by the neural network. In other words, the neural network will be able to perform any of these tasks when an appropriate prompt or request is received.

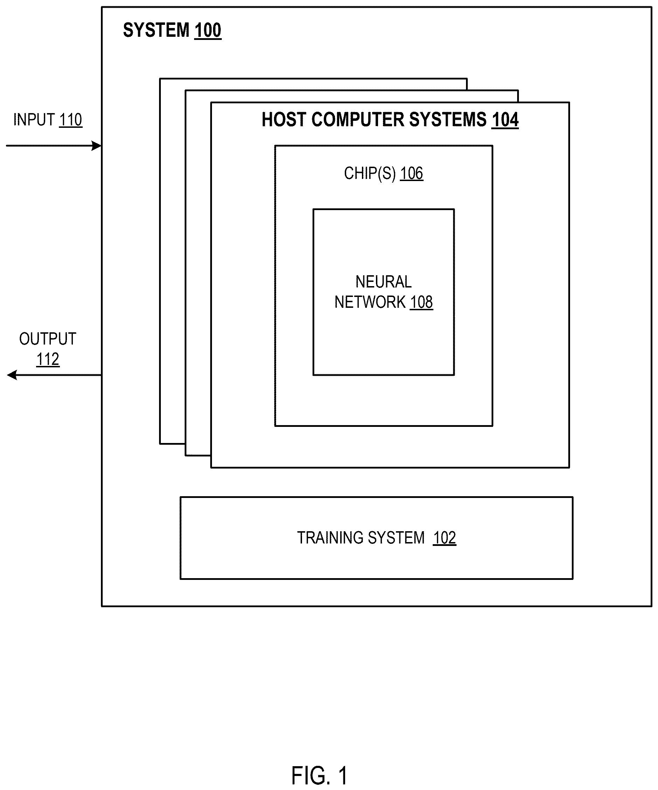

FIG. 1 shows an example neural network system 100. The neural network system 100 is an example of a system implemented as computer programs on one or more computers in one or more locations, in which the systems, components, and techniques described below can be implemented.

The system 100 is a system that processes a network input 110 using a neural network 108 that includes one or more layers to generate a network output 112 characterizing the network input 110 for a machine learning task, e.g., one of the tasks described above.

The layers include one or more Mixture of Experts (MoE) layers. Each MoE layer includes multiple expert neural networks that are each configured to process respective sub-inputs determined from the input 110 in accordance with a respective set of expert parameters of the expert neural network to generate a respective expert output. In particular, the sub-inputs can be one or more tokens of a sequence of tokens. A token represents a portion of the one or more inputs in a particular modality, e.g., a text token, a visual token, an audio token, etc.

The system can deploy the neural network 108 on multiple host computer systems 104 (e.g., TPUs, GPUs, CPUs, etc.). Each host computer system 104 can include one or more chips 106, where each chip 106 includes one or more processing devices configured to execute at least a portion of the neural network 108. The neural network 108 can be implemented in a distributed manner across the multiple host computer systems 104, such that different portions of the neural network 108 are executed on different host computer systems 104 and corresponding chips 106.Each of the host computer systems 104 is a processor configured to generate an output 112 by processing an input 110 using one or more neural networks 108. In particular, each expert neural network of the one or more MoE layers can be deployed on a respective one of the host computer systems 104. For example, each expert neural network can be deployed on a different host computer system 104 or a subset of two or more experts can be deployed on the same host computer system 104.

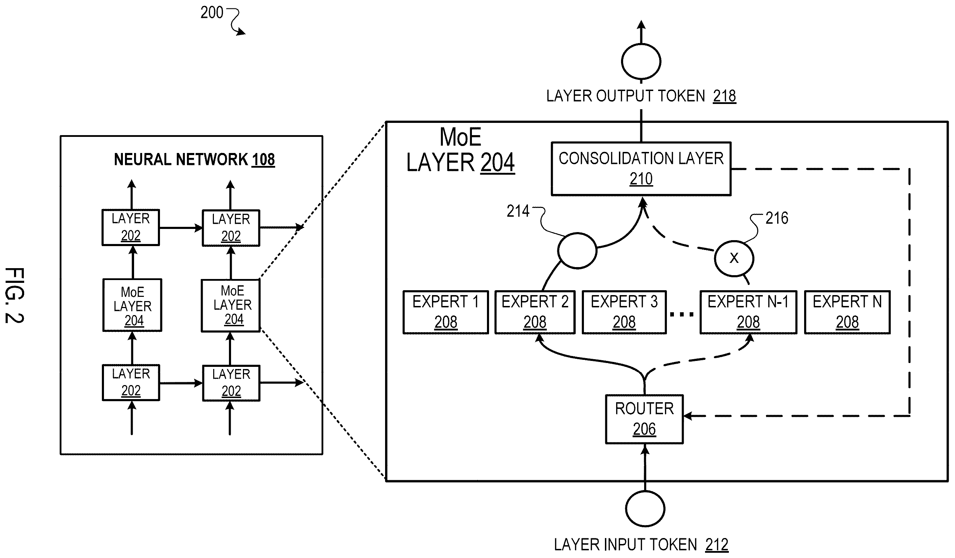

In particular, the input 110 can include multiple sub-inputs, and each host computer system 104 can process each of the multiple sub-inputs to generate one or more corresponding sub-outputs. The system can then provide the one or more sub-outputs (e.g., input tokens) to one or more expert neural networks of the one or more MoE layers, as described in further detail below with reference to FIG. 2. The sub-inputs can be any appropriate subset of the elements of the input.

In some implementations, each sub-input is the same size, i.e., includes the same number of elements. For example, each sub-input can be a different one of the elements in the input. In some other implementations, different sub-inputs can be different sizes, i.e., include different numbers of elements.

In some implementations, each element of the input is in exactly one sub-input. In some other implementations, some or all of the elements of the input can be in multiple different sub-inputs.

The neural network 108 includes one or more network layers that are each configured to process the network input or an intermediate representation of the network input and to generate a layer output. The neural network can include any appropriate types of neural network layers (e.g., embedding layers, fully connected layers, attention layers, convolutional layers, etc.) in any appropriate number (e.g., 5 layers, 10 layers, or 100 layers) and connected in any appropriate configuration (e.g., as a directed graph of layers).

In some implementations, the network output 112 for the neural network 108 is the layer output of the final layer of the neural network 108. In some other implementations, the output of the final layer is further processed using one or more output neural network layers to generate the network output 112 for the neural network 108.

Each expert neural network of the MoE layer is configured to process one or more sub-outputs (e.g., input tokens) provided by a preceding layer of the neural network 108. In particular, each MoE layer includes a router configured to assign each input token to one or more expert neural networks. For example, the router can be configured to generate a score distribution that includes a respective routing score for each expert neural network, and then assign the input token to the expert neural networks with the highest *k* corresponding routing scores, as described in more detail below with reference to FIG. 2.

Additionally, each MoE layer includes a consolidation layer that is configured to generate a layer output token for the input token from the outputs of the assigned expert neural networks. The consolidation layer can identify a failure of one or more of the expert neural networks or the respective host computer system 104 based on receiving one or more outputs, and the system can efficiently process the input 110 to generate the output 112 regardless of the individual failures based on implementing the consolidation layer. In particular, the consolidation layer can receive one or more failure tokens indicating that a failure occurred during processing, and the consolidation layer can generate a layer output token for the input token from the outputs of the particular expert neural networks, as described in more detail below with reference to FIGs. 2-4. In this way, the system can continue to generate outputs by leveraging the consolidation layer to process the failure tokens and generate layer outputs corresponding to one or more experts, regardless of the failure.

Prior to using the neural network 108 to perform the machine learning task, a training system 102 trains the neural network 108 to perform the task, i.e., to determine trained values of the parameters of the neural network 108, e.g., the parameters of the layer described above and, optionally, the parameters of an embedding subnetwork used to generate the input to the first layer of the neural network 108, an output subnetwork that generates the network output from the output of the last layer of the neural network 108, or both. For example, the training system 102 can train the neural network 108 from scratch on training data for the task to minimize a loss function for the task, e.g., a cross-entropy loss, a negative log likelihood loss, and so on using conventional machine learning techniques. As another example, the training system 102 can first pre-train the neural network 108 on an unsupervised objective and then fine-tune the neural network on the training data for the task. As yet another example, the training system 102 can train the neural network 108 on both unlabeled data and the training data for the task through semi-supervised learning.

During training, the training system 102 can incorporate any number of techniques to improve the speed, the effectiveness, or both of the training process. For example, the system can use dropout, label smoothing, or both to reduce overfitting. As another example, the system can perform the training using a distributed architecture that trains multiple instances of the neural network in parallel.

FIG. 2 shows the operations performed by a Mixture of Experts (MoE) layer of the neural network system as described in this specification.

The neural network 108 includes multiple layers 202 and multiple MoE layers 204. The layers 202 can include other types of layers, e.g., self-attention network blocks that apply self-attention, that do not include routers and expert neural networks, i.e., that do not perform conditional computation and use all of the parameters of network for all inputs to the network.

As a particular example, the layers can alternate between MoE layers 204 and self-attention layers 202. A self-attention neural network layer 202 receives multiple sub-inputs as input and applies an attention mechanism over the sub-inputs to generate a sequence of layer outputs elements. In particular, for each sub-input, the self-attention neural network layer 202 applies the attention mechanism using one or more queries derived from the sub-input to generate a respective output.

The plurality of expert neural networks may be configured to operate in parallel. More specifically, the MoE layer can be implemented such that the expert neural networks are executed in parallel for a given input, thus improving the efficiency of the system. For example, the expert neural networks of the MoE layer can be distributed across multiple devices, and in some cases, the system can execute the expert neural networks in parallel. That is, at least some expert neural networks of the MoE layer can be implemented on respective different devices (e.g., different devices that are communicatively connected and that provide the expert outputs generated by the respective expert subnetwork to a single device for combining to generate the layer output). Such a network architecture allows the operations of the neural network to be parallelized for quick and low-cost execution and computation and to allow for larger neural networks, e.g., by parallelizing the operations of respective expert subnetworks across multiple devices, such that the neural network does not execute on a single device).

The MoE layer 204 includes a router 206, one or more expert neural networks 208, and a consolidation layer 210.

The router 206 is configured to route a sub-input (e.g., a layer input token 212) to one or more expert neural networks 208 based on a scoring distribution. The layer input token 212 is derived from an input token of the input 110. Each of the expert neural networks 208 are configured to process the sub-input in order to generate a respective output. The consolidation layer 210 is configured to process the respective outputs of the expert neural networks 208 to generate a layer output (e.g., a layer output token 218) for the MoE layer 204.

In general, an MoE layer can include *N* expert neural networks. Each expert neural network 208 can have any appropriate neural network architecture with its own parameters. The expert neural networks 208 are configured to receive the same sized inputs and produce the same-sized outputs. In some implementations, the expert neural networks 208 are feed-forward neural networks with identical architectures, but with different parameters. In some examples, each expert neural network 208 may have a relatively large number of parameters.

The router 206 can use any appropriate routing scheme to route each token to one or more experts. That is, the router 206 can route different tokens to different experts and, in some cases, can route the same token to two or more different experts.

For example, the router can select one or more expert neural networks 208 of the *N* expert neural networks 208 to process the layer input token 212. In particular, the router 206 assigns the input token 212 to the one or more selected expert neural networks 208 based on generating a score distribution. The score distribution 218 includes a respective routing score (e.g., a weight, logit, or probability) for each expert neural network 208 that represents a probability of the expert neural network in processing the input. The score distribution can be a vector, where each element is a routing score that corresponds to a different expert neural network 208.

The router 206 can select multiple expert neural networks 208 by selecting the *k* highest routing scores of the score distribution. For example, as shown in FIG. 2, the router 206 assigns the layer input token 212 to the expert neural networks 208 with the two highest scores of the scoring distribution (Expert 2 and Expert *N*-1). In another example, the score distribution can be over the layer input tokens for each expert 208.

In another example, the router 206 can generate, for each expert neural network 208, a score distribution over the multiple layer input tokens 212 that includes a respective routing score for each layer input tokens 212. The router 206 can then route, for each expert neural network 208, the input tokens 212 corresponding to the *k* highest routing scores in the score distribution for the expert neural network 208. As a result, the same token can be routed to multiple different expert neural networks 208.

Advantageously, the system is pre-trained to account for partial failures, such that these failures do not affect or degrade overall system performance. In particular, the system can be pre-trained to perform a particular procedure based on a failure occurring during processing of the layer input token 212 by the expert neural network 208. The system may be trained using simulated failure conditions such as stalled experts, malformed outputs, or hardware-related memory-check failures.

When a failure does occur, the system can perform the procedure to account for the failure without halting layer operations or degrading the performance of the neural network. That is, because each of the expert neural networks are processed by different computer systems, the system can efficiently avoid degradation in performance by performing the procedure for the single failed expert neural network. Furthermore, because the router 206 can assign each input token 212 to multiple expert neural networks, the consolidation layer 210 does not need every expert output to generate the output token 218, such that if one of the computer systems executing one of the expert neural networks has failed during processing, the inference pipeline can continue.

For example, the system can determine one or more failures based on an expiration of a timer for the expert neural network 208 to process the layer input token 212.

As another example, the system can determine a failure based on the expert output not satisfying one or more criteria for outputs generated by the expert neural network. In this case, a number of elements of the output or a form of the output token may not satisfy the criteria..

As another example, the system can determine one or more failures by performing one or more memory read procedures on the output. In particular, the system can perform a memory read procedure that can identify one or more elements of the output indicating a parity code failure, an error-correcting code failure, or a code failure that indicates that an aspect of the computation for generating the output was corrupted.

As another example, the system can determine one or more failures by again generating the expert output using the expert neural network (e.g., generating the expert output a second time). In particular, the system can again process the layer input token 212 using the particular expert neural network (e.g., in space or time), and the system can compare the output of the second process with the output of the first process. In this case, if the outputs are not the same, the system can determine a failure and output the failure token. As shown in FIG. 2, Expert 2 processes the layer input token 212 and generates an expert output token 214. Expert N-1, on the other hand, may have encountered a failure while processing the input 212, and Expert N-1 provides a failure token 216 indicating the failure, rather than the corresponding expert output token. The failure token 216 is a pre-determined or fixed collection of numeric values that the system can use to associate with failures. That is, the failure token can represent a single failure by an expert. For example, the failure token 216 can be a text token or a token of numerical values that indicates a partial failure.

In some examples, the expert neural network 208 can generate multiple failure tokens 216 indicating the failure. Each of the assigned expert neural networks 208 provide their respective output to the consolidation layer 210. In this case, Expert 2 provides the expert output 214, and Expert N-1 provides the failure token 216.

The consolidation layer 210 then processes the respective outputs to generate the layer output token 218 for the layer. The consolidation layer 210 can combine the expert outputs generated by the selected expert neural networks in accordance with the weights for the selected expert neural networks to generate the output token 218.

For example, in the case where the assigned expert neural networks each generate a respective expert output, the consolidation layer 210 can multiply the expert output generated by each of the selected expert neural networks by the weight for the selected expert neural network to generate a weighted expert output, and the consolidation layer can sum the weighted expert outputs to generate the output token 218.

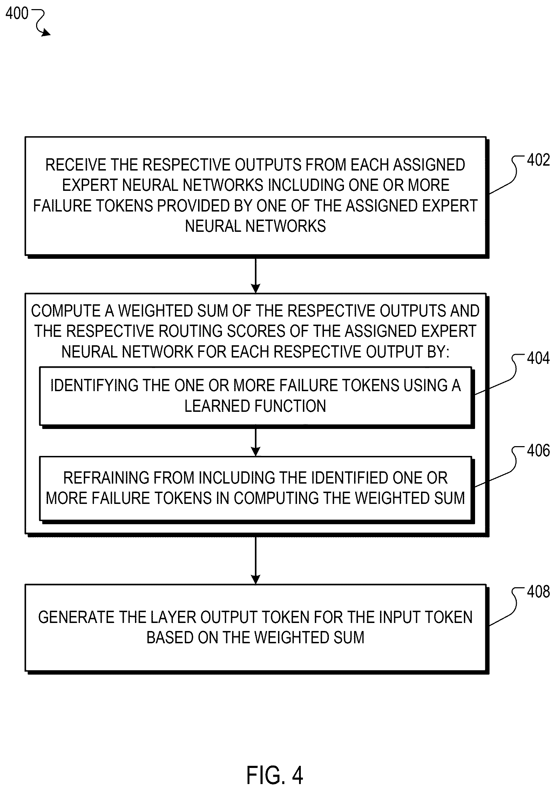

In another example, in the case where at least one of the assigned expert neural networks generates a failure token, the consolidation layer 210 can refrain from including the failure token as part of the weighted output (e.g., refrain from summing the product of the failure token 216 and the corresponding weight to the expert output), as described in further detail below with reference to FIG. 4.

In this case, the consolidation layer 210 can still generate the output token 218 based on the weighted expert output 214 (e.g., the product of the expert output 214 of Expert 2 and the respective weight), despite the failure by Expert N-1. The system can then generate a final output representing each layer output token 218 from each of the multiple layers 202 or MoE layers 204.

In some other examples, the consolidation layer can implement one or more learned operations to process the respective outputs to generate the output token. For example, the consolidation layer can be a self-attention layer, a fully-connected layer, or a convolutional layer. In these cases, by virtue of the training of the neural network, the consolidation layer "learns" to account for failure tokens when processing the respective outputs.

In some other examples, the consolidation layer 210 can identify whether an output token 214 from one of the expert neural networks 208 is more than a threshold distance from an aggregate output token determined from the output tokens 214 of the other expert neural networks 208. If the output token 214 is more than a threshold distance from the aggregate output token, the consolidation layer 210 can determine to refrain from processing the particular output token (e.g., ignoring the particular output token). In another example, the consolidation layer 210 can provide an instruction to the router 206 to refrain from routing input tokens 212 to the particular expert neural network 208 that generated the output token 214 that was distant form the other output tokens 214. For example, the aggregate output token can be determined as the mean of all output tokens that were generated from the same input token as the output token 214 or as the mean of all output tokens from all experts.

Thus, by implementing the consolidation layer, the system can identify individual failures without disrupting execution of the overall system. That is, an expert neural network of the MoE layer may fail while processing an input, or one of the hardware devices may malfunction during processing. Due to the parallel nature of the network architecture, the system can determine a failure based on the expert neural networks generating one or more failure tokens, and the system can continue generating a network output regardless of the individual failure.

The system then provides the layer output token 218 as input to the second neural network layer 202.

In some examples, the MoE layer 204 can receive one or more additional layer input tokens. In this case, the system can optionally assign or refrain from assigning the additional layer input tokens 212 to the expert neural network based on the expert neural network providing the one or more failure tokens 216. For example, based on Expert N-1 providing the failure token 216 to the consolidation layer 210, the system can communicate to the router 206 to refrain from assigning the one or more additional layer input tokens 212 to Expert N-1 or any other expert executing on the same device as Expert N-1. In another example, the router 206 can continue assigning the additional layer input tokens 212 to Expert N-1, and the system can generate one or more failure tokens 216 using Expert N-1 for each additional layer input token 212. That is, Expert N-1 continues to pass the failure token to the consolidation layer 210 for each additional layer input token 212.

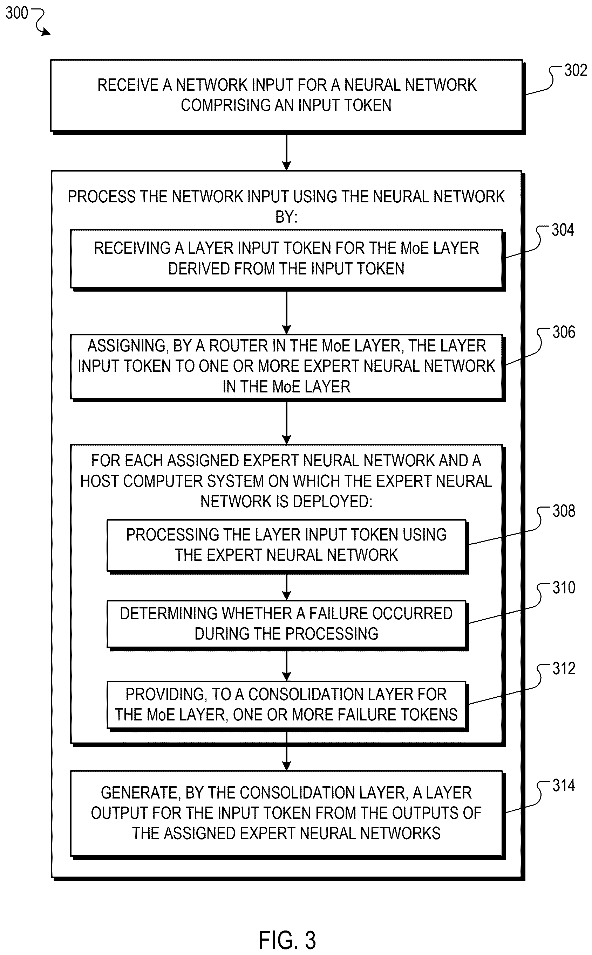

In some examples, the system can generate a failure report as part of the output that indicates the failures determined by the system for the MoE layers 204, as described in further detail below with reference to FIG. 3.

FIG. 3 is a flow diagram 300 of an example process for processing a network input to generate a network output. For convenience, the process 300 will be described as being performed by a system of one or more computers located in one or more locations. For example, a neural network system, e.g., the neural network system 100 of FIG. 1, appropriately programmed, can perform the process 300.

The system can receive a network input for a neural network that includes an input token (302). For example, the network input can include multiple input tokens that represent a request from a user to perform a machine learning task using the neural network. The neural network can include multiple layers, and the multiple layers can include an MoE layer with a router, multiple expert neural networks, and a consolidation layer. Each expert neural network can be deployed on a respective host computer system of multiple different respective host computer systems.

The system can process the network input using the neural network to generate a network output.

As part of the processing, the system receives a layer input token for the MoE layer derived from the input token (304). For example, the layer input token can be a sub-output of a preceding neural network layer. In some examples, the system receives multiple layer input tokens for the MoE layer, and the system can provide each layer input token to the MoE layer at a time.

The router of the MoE layer can assign the layer input token to one or more of the expert neural networks. For example, the router can generate a scoring distribution that includes a router score for each expert neural network. Based on the scoring distribution, the router can assign the layer input token to multiple expert neural networks with the k highest routing scores of the distribution.

For each assigned expert neural network and respective host computer system on which the expert neural network is deployed, the system can process the layer input token using the expert neural network (310). During processing, the system can determine whether a failure occurred. For example, the system can determine whether a hardware failure of the host computing system on which the expert neural network is deployed has occurred. More generally, the failure can be a failure of the expert neural network, a hardware failure of the host computer system, or a combination thereof. The host computer system may be pre-trained to perform a procedure for accounting for the failure. If the system determines that a failure has occurred in relation to an expert neural network and/or the respective computer system on which it is deployed, then the output of the expert neural network may be taken to be a failure token for the purposes of determining the inputs to the consolidation layer. In some examples, the failure token may be substituted for the output of the expert neural network. That is, the failure token may be output on behalf of the expert neural network.

For example, the procedure can include determining a failure based on an expiration of a timer for the expert neural network to process the layer input token. The expert neural network may stall or take a relatively extended period of time (e.g., a period of time that exceeds a particular time set by the timer) to process the layer input token, and the system can determine that a failure has occurred.

In another example, the procedure can include determining a failure based on the expert neural network generating an expert output that does not satisfy one or more criteria for outputs generated by the expert neural network. The expert neural network may generate a token or a vector of a shape that does not satisfy the criteria or include elements that do not satisfy the criteria, and the system can determine that a failure has occurred. For example, the criteria may include that an output of the expert neural network can be a vector of *n* elements, and the system can identify a failure based on the vector being a vector of *m* elements.

In these cases, the system can generate one or more failure tokens using the neural network to indicate the failure. For example, if no valid output is received from an expert neural network or its host computer system, the system may designate that expert neural network's output as a failure token. The one or more failure tokens can indicate varying degrees of failure based on the determined failure. For example, in the case where the system determines a failure based on an expiration of a timer, the expert neural network can generate one or more failure tokens that indicate a high level of failure. In the case where the system determines a failure based on the expert output not satisfying the criteria, the expert neural network can generate one or more failure tokens that indicate a relatively lower level of failure.

The system can provide the one or more failure tokens to the consolidation layer (312).

The consolidation layer can generate a layer output for the input token from the outputs of the assigned expert neural networks (314). For example, the consolidation layer can compute a weighted sum of the expert outputs and disregard the one or more failure tokens to still generate an output for the layer while recognizing a failure of the system, as described in further detail below with reference to FIG. 4.

The system can then generate a final output representing each layer output token from each of the multiple layers. In some examples, the system can provide the final output to the user using the user interface in response to the request by the user.

In the case where the system determined one or more failure occurred, the system can also provide a failure report to the user via the user interface. The failure report can include one or more failure tokens for each layer and an indication that identifies the one or more expert neural networks that provided one or more failure tokens. Additionally, the failure report can include a level of failure indicated by the one or more failure tokens. In this way, the system can allow a user of the system to fix or refrain from using the failed expert neural network or the host computer system of the expert neural network to ensure system performance.

In some examples, the system can determine to provide the failure report based on a threshold. For example, a user can set a threshold for a number of failure tokens, and the system can notify the user or output the failure report based on the number of failure tokens exceeding the threshold, which corresponds to a number of individual failures occurring during processing. In another example, the threshold can be a threshold level of failure (e.g., a high level of failure based on an expiration of a timer during processing).

FIG. 4 is a flow diagram of an example process 400 for processing outputs of one or more expert neural networks using a consolidation layer of the MoE layer. For convenience, the process 400 will be described as being performed by a system of one or more computers located in one or more locations. For example, a consolidation layer of an MoE layer, e.g., the consolidation layer 210 of the MoE layer 204 of FIG. 2, appropriately programmed, can perform the process 400.

The consolidation layer can receive the respective outputs from each assigned expert neural network including one or more failure tokens provided by at least one of the assigned expert neural networks (402).

The consolidation layer can compute a weighted sum of the respective outputs and the respective routing scores of the assigned expert neural networks for each respective output by identifying the one or more failure tokens using a learned function (404). The consolidation layer can refrain from including the identified one or more failure tokens in computing the weighted sum (406). As described above, in some examples, the consolidation layer can provide data identifying the expert(s) that generated the one or more failure tokens to the router or to another component of the system for improving the generation of future outputs.

In particular, the consolidation layer can multiply the expert output generated by each of the selected expert neural networks by the weight for the selected expert neural network to generate a weighted expert output, and the consolidation layer can sum the weighted expert outputs to compute the weighted sum. Prior to computing the weighted sum, the consolidation layer can identify whether any of the expert outputs are failure tokens, and the consolidation can refrain from using the failure tokens to compute the weighted sum. That is, the consolidation layer disregards the failure tokens in generating the layer output such that overall system operations are preserved.

In some examples, the system can perform a procedure based on the failure token. For example, the system can perform a procedure that refrains from providing inputs to the particular failed expert. In another example, the system can identify the failed expert, and the system can output information of the failed expert (e.g., information including the identified failed expert and the particular output of the failed expert).

The consolidation layer can generate the layer output token for the input token based on the weighted sum (408). Optionally, as part of generating the layer output token, the system can apply one or more additional operations to the weighted sum of the expert outputs (e.g., the weighted sum may be processed by one or more of feed-forward layers, skip connections, or normalization operations, e.g., layer normalization).

During training, the system can train the neural network, and in particular, the consolidation layer, to be robust to failures. For example, for each given hardware device, the system can randomly simulate one or more failures with a probability *p*. In particular, the system can replace any given output token generated by an expert deployed on the device with a failure token with probability p to simulate the occurrence of a failure while keeping the target output the same. The system can then train the consolidation layer to robustly account for the failure while still generating a high quality output, allowing for uninterrupted performance of the system.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

This specification also includes the subject matter of the following clauses:
1. A method performed by a plurality of host computer systems, the method comprising:
   receiving a network input for a neural network, the network input comprising an input token and the neural network comprising a plurality of layers, the plurality of layers comprising a mixture of experts (MoE) layer that includes (i) a router, (ii) a plurality of expert neural networks, and a (iii) consolidation layer, wherein each expert neural network is deployed on a respective one of the plurality of host computer systems; and
   processing the network input using the neural network, comprising:
      receiving a layer input token for the MoE layer that is derived from the input token;
      assigning, by the router in the MoE layer, the layer input token to one or more of the expert neural networks in the MoE layer;
      for each assigned expert neural network and by the host computer system on which the expert neural network is deployed:
         processing the layer input token using the expert neural network;
         determining whether a failure occurred during the processing; and
         in response to determining that a failure occurred, providing, to the consolidation layer for the MoE layer and as output of the expert neural network, one or more failure tokens that indicate that the failure occurred during the processing; and
      generating, by the consolidation layer, a layer output token for the input token from the outputs of the assigned expert neural networks.
2. The method of clause 1, wherein each of the plurality of host computer systems comprises a chip and a corresponding host.
3. The method of clause 1, wherein the host computer system is pre-trained to perform a particular procedure for determining a failure occurred during the processing of the layer input token by the expert neural network.
4. The method of clause 3, wherein the particular procedure for determining a failure comprises:
   determining the failure based on the expiration of a timer for the expert neural network to process the layer input token, wherein the expert neural network is pre-trained to generate a failure token based on the expiration of the timer.
5. The method of clause 3, wherein the particular procedure for determining a failure comprises:
   determining the failure based on the respective expert neural network generating an output token that does not satisfy one or more criteria for outputs generated by the expert neural network.
6. The method of clause 1, wherein the determining a failure occurred during processing indicates a failure of the assigned expert neural network, a hardware failure of the host computer system, or a combination thereof.
7. The method of clause 1, wherein assigning, by the router in the MoE layer, the layer input token to one or more of the expert neural networks in the MoE layer comprises:
   generating a respective score distribution for each expert neural network, wherein the score distribution includes a respective routing score for each of the expert neural networks; and
   assigning the layer input token to one or more of the expert neural networks based on the score distribution.
8. The method of clause 7, wherein generating, by the consolidation layer, a layer output token for the input token from the outputs of the assigned expert neural networks further comprises:
   receiving the respective outputs from each assigned expert neural network, wherein at least one respective output comprises one or more failure tokens provided by at least one of the assigned expert neural networks;
   computing a weighted sum of the respective outputs and the respective routing scores of the assigned expert neural networks for each respective output; and
   generating the layer output token for the input token based on the weighted sum.
9. The method of clause 8, wherein computing the weighted sum of the respective outputs based on the respective scores of the assigned expert neural networks comprises:
   identifying the one or more failure tokens using a learned function, wherein the consolidation layer is pre-trained on the learned function; and
   refraining from including the identified one or more failure tokens in computing the weighted sum.
10. The method of clause 1, wherein processing the network input using the neural network further comprises:
   receiving one or more additional layer input tokens derived from the input token.
11. The method of clause 10, further comprising:
   refraining, by the router in the MoE layer, from assigning the one or more additional layer input tokens to an expert neural network that provided one or more failure tokens in response to determining a failure occurred.
12. The method of clause 11, further comprising:
   assigning, by the router in the MoE layer, an additional layer input token of the one or more additional layer input tokens to an expert neural network that provided one or more failure tokens in response to determining a failure occurred; and
   providing, to the consolidation layer for the MoE layer and as output of the expert neural network that provided one or more failure tokens in response to determining a failure occurred, the one or more failure tokens.
13. The method of clause 1, further comprising:
   receiving, from a user via a user interface, the network input based on the user submitting a request for performing a task using the neural network.
14. The method of clause 13, further comprising:
   generating a final output representing each layer output token from each of the plurality of layers;
   providing the final output to the user using the user interface.
15. The method of clause 14, wherein providing the final outputs to the user using the user interface comprises:
   providing, to the user via the user interface, a failure report comprising the one or more failure tokens and an indication that identifies the one or more expert neural networks that provided one or more failure tokens.
16. The method of clause 15, wherein providing the failure report is based on a threshold.
17. A system comprising one or more computers and one or more storage devices storing instructions that are operable, when executed by the one or more computers, to cause the one or more computers to perform operations comprising:
   receiving a network input for a neural network, the network input comprising an input token and the neural network comprising a plurality of layers, the plurality of layers comprising a mixture of experts (MoE) layer that includes (i) a router, (ii) a plurality of expert neural networks, and a (iii) consolidation layer, wherein each expert neural network is deployed on a respective one of the plurality of host computer systems; and
   processing the network input using the neural network, comprising:
      receiving a layer input token for the MoE layer that is derived from the input token;
      assigning, by the router in the MoE layer, the layer input token to one or more of the expert neural networks in the MoE layer;
      for each assigned expert neural network and by the host computer system on which the expert neural network is deployed:
         processing the layer input token using the expert neural network;
         determining whether a failure occurred during the processing; and
         in response to determining that a failure occurred, providing, to the consolidation layer for the MoE layer and as output of the expert neural network, one or more failure tokens that indicate that the failure occurred during the processing; and
      generating, by the consolidation layer, a layer output token for the input token from the outputs of the assigned expert neural networks.
18. The system of clause 17, wherein each of the plurality of host computer systems comprises a chip and a corresponding host.
19. One or more computer storage media storing instructions that when executed by one or more computers cause the one more computers to perform operations comprising:
   receiving a network input for a neural network, the network input comprising an input token and the neural network comprising a plurality of layers, the plurality of layers comprising a mixture of experts (MoE) layer that includes (i) a router, (ii) a plurality of expert neural networks, and a (iii) consolidation layer, wherein each expert neural network is deployed on a respective one of the plurality of host computer systems; and
   processing the network input using the neural network, comprising:
      receiving a layer input token for the MoE layer that is derived from the input token;
      assigning, by the router in the MoE layer, the layer input token to one or more of the expert neural networks in the MoE layer;
      for each assigned expert neural network and by the host computer system on which the expert neural network is deployed:
         processing the layer input token using the expert neural network;
         determining whether a failure occurred during the processing; and
         in response to determining that a failure occurred, providing, to the consolidation layer for the MoE layer and as output of the expert neural network, one or more failure tokens that indicate that the failure occurred during the processing; and
      generating, by the consolidation layer, a layer output token for the input token from the outputs of the assigned expert neural networks.
20. The one or more computer storage media of clause 19, wherein each of the plurality of host computer systems comprises a chip and a corresponding host.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by a plurality of host computer systems, the method comprising:
receiving a network input for a neural network, the network input comprising an input token and the neural network comprising a plurality of layers, the plurality of layers comprising a mixture of experts (MoE) layer that includes (i) a router, (ii) a plurality of expert neural networks, and a (iii) consolidation layer, wherein each expert neural network is deployed on a respective one of the plurality of host computer systems; and
processing the network input using the neural network, comprising:
receiving a layer input token for the MoE layer that is derived from the input token;
assigning, by the router in the MoE layer, the layer input token to one or more of the expert neural networks in the MoE layer;
for each assigned expert neural network and by the host computer system on which the expert neural network is deployed:
processing the layer input token using the expert neural network;
determining whether a failure occurred during the processing; and
in response to determining that a failure occurred, providing, to the consolidation layer for the MoE layer and as output of the expert neural network, one or more failure tokens that indicate that the failure occurred during the processing; and
generating, by the consolidation layer, a layer output token for the input token from the outputs of the assigned expert neural networks.

2. The method of claim 1, wherein each of the plurality of host computer systems comprises a chip and a corresponding host.

3. The method of claim 1, comprising performing a particular procedure for determining a failure occurred during the processing of the layer input token by the expert neural network.

4. The method of claim 3, wherein the particular procedure for determining a failure comprises:
determining the failure based on the expiration of a timer for the expert neural network to process the layer input token, wherein the expert neural network is pre-trained to generate a failure token based on the expiration of the timer, or
determining the failure based on the respective expert neural network generating an output token that does not satisfy one or more criteria for outputs generated by the expert neural network.

5. The method of claim 1, wherein the determining a failure occurred during processing indicates a failure of the assigned expert neural network, a hardware failure of the host computer system, or a combination thereof.

6. The method of claim 1, wherein assigning, by the router in the MoE layer, the layer input token to one or more of the expert neural networks in the MoE layer comprises:
generating a respective score distribution for each expert neural network, wherein the score distribution includes a respective routing score for each of the expert neural networks; and
assigning the layer input token to one or more of the expert neural networks based on the score distribution.

7. The method of claim 6, wherein generating, by the consolidation layer, a layer output token for the input token from the outputs of the assigned expert neural networks further comprises:
receiving the respective outputs from each assigned expert neural network, wherein at least one respective output comprises one or more failure tokens provided by at least one of the assigned expert neural networks;
computing a weighted sum of the respective outputs and the respective routing scores of the assigned expert neural networks for each respective output; and
generating the layer output token for the input token based on the weighted sum.

8. The method of claim 7, wherein computing the weighted sum of the respective outputs based on the respective scores of the assigned expert neural networks comprises:
identifying the one or more failure tokens using a learned function, wherein the consolidation layer is pre-trained on the learned function; and
refraining from including the identified one or more failure tokens in computing the weighted sum.

9. The method of claim 1, wherein processing the network input using the neural network further comprises:
receiving one or more additional layer input tokens derived from the input token, and, optionally, refraining, by the router in the MoE layer, from assigning the one or more additional layer input tokens to an expert neural network that provided one or more failure tokens in response to determining a failure occurred.

10. The method of claim 9, further comprising:
assigning, by the router in the MoE layer, an additional layer input token of the one or more additional layer input tokens to an expert neural network that provided one or more failure tokens in response to determining a failure occurred; and
providing, to the consolidation layer for the MoE layer and as output of the expert neural network that provided one or more failure tokens in response to determining a failure occurred, the one or more failure tokens.

11. The method of claim 1, further comprising:
receiving, from a user via a user interface, the network input based on the user submitting a request for performing a task using the neural network.

12. The method of claim 11, further comprising:
generating a final output representing each layer output token from each of the plurality of layers;
providing the final output to the user using the user interface.

13. The method of claim 12, wherein providing the final outputs to the user using the user interface comprises:
providing, to the user via the user interface, a failure report comprising the one or more failure tokens and an indication that identifies the one or more expert neural networks that provided one or more failure tokens, optionally wherein providing the failure report is based on a threshold.

14. A system comprising one or more computers and one or more storage devices storing instructions that are operable, when executed by the one or more computers, to cause the one or more computers to perform operations comprising the method of any one of the preceding claims.

15. One or more computer storage media storing instructions that when executed by one or more computers cause the one more computers to perform operations comprising the method of any one of claims 1 to 13.
